# EUROPEAN PATENT SPECIFICATION

(11) **EP 0 739 771 B1**
(45) Date of publication and mention of the grant of the patent: **11.08.1999**
(21) Application number: 95935458.0
(22) Date of filing: 30.10.1995
(51) Int. Cl.: B60K 26/04, F16H 59/20

(54) **OVERACCELERATION SENSING DEVICE**
VORRICHTUNG ZUM ERKENNEN VON ÜBERBESCHLEUNIGUNG
DISPOSITIF DETECTEUR DE SURACCELERATION

(30) Priority: 11.11.1994 ES 9402327
(43) Date of publication of application: 30.10.1996
(73) Proprietor: FICO CABLES, S.A., 08028 Barcelona (ES)
(72) Inventor: GABAS CEBOLLERO, Carlos, E-08029 Barcelona (ES)
(74) Representative: SUGRANES - VERDONCES - FERREGÜELA
(86) International application number: ES9500118
(87) International publication number: WO9615007

(56) References cited:
- EP-A- 251 866
- EP-A- 622 817
- DE-A- 3 442 469

## Description

### Technical field of the invention

The object of the invention is an over-acceleration detector device, of the type known as "kick-down" devices, of particular application for the detection of over-acceleration on automobile vehicles provided with automatic transmission.

### Background of the invention

As is known, such over-acceleration detector devices are fitted on the automobile vehicle at an intermediate point of the run of the control cable which links the accelerator pedal with the corresponding mechanism of the vehicle engine carburettor, without this control cable being at any time discontinuous. Over-acceleration detector devices act on the automatic transmission gearbox when the driver of the vehicle presses the accelerator pedal fully down, at which time the detector device operates through a mechanism on the gear change so that the latter changes its transmission ratio down.

The known embodiments of over-acceleration devices operate by mechanical stress on the control cable sheath, specifically when the said sheath is subjected to greater compression, when the accelerator pedal is pressed during driving of the vehicle.

In general, the known embodiments of over-acceleration detector devices have a structure composed of the following parts. A hollow main body in which is housed a stem which can slide in both directions and which projects through one of the ends of the main body, the stem being traversed axially and with loose fit by the steel cable of the control cable. One or several springs which work permanently under compression with one of their ends resting against the main body and the other against the stem. A switch whose contacts, fixed and movable, are attached to the main body and to the stem respectively. Means for anchorage of the main body to a fixed point of the vehicle structure, and means for securing the intermediate ends of the control cable sheath, in such a way that one of the said intermediate ends is attached to the end of the stem which projects from the main body and the other intermediate end is attached to the main body.

The operation of over-acceleration detector devices such as those described is as follows. Once the detector device has been fitted at an intermediate point of the control cable run and the length of the sheathed portion of cable suitably adjusted by means of a self-adjusting or self-regulating device, of which there exist a wide variety of embodiments in the market, in the absence of pressure on the accelerator pedal, that is, with the pedal in rest position, the action of the detector device spring on the stem keeps the switch contacts separated, that is, the switch is in open position. During driving of the vehicle, action on the accelerator pedal and the corresponding reaction of the control cable sheath sets up a sliding motion of the stem towards the interior of the main body. If the action on the accelerator pedal situates the pedal in a more advanced position, that is, if the pedal is pressed fully down, the sliding of the stem towards the interior of the main body leads to closure of the switch contacts, which gives rise to the action of said mechanism on the automatic transmission gearbox. When the action on the accelerator pedal ceases, the elastic reaction of the detector device spring pushes the stem towards the exterior of the main body so that the switch is left open again in its initial position prior to the action of pressing the pedal fully down.

As an example of embodiment of the over-acceleration detector device we might cite the device made known by the German patent No. DE 3442469 (priority date 22.11.84, publication date 28.05.86). This detector device has the following generic parts: a hollow main body; a stem housed in the main body; a spring disposed coaxially with respect to the stem; a switch; means for fastening the intermediate ends of the control cable sheath; and means for connecting the switch to the corresponding electric circuit.

In general, the known over-acceleration detector devices present as their main disadvantage the fact that the means which the devices incorporate so that the vehicle driver, upon pressing on the accelerator pedal, perceives that the point of maximum acceleration has been reached, in some cases do not permit them to be used in accordance with the needs arising in each specific case of application.

### Explanation of the invention

A new embodiment of the over-acceleration detector device is made known hereby in order to provide a solution to the disadvantages presented by the known embodiments of detector devices, in particular those disadvantages deriving from the lack of suitability of the devices for indicating when the driver, in pressing on the accelerator pedal, reaches the point of maximum acceleration.

The over-acceleration detector device of the invention includes the following known parts. A hollow main body of generally elongated cylindrical shape, one of the ends of which is open and has a closure cover coupled to it, while its other end is closed, this main body having in its middle zone a radial extension whose free end is designed to receive an electrical connector; a stem of generally cylindrical shape arranged coaxially with respect to the main body, in which it is partially housed, the stem having a centred orifice running through its entire length, through which orifice there can slide with free play the steel cable of the control cable, while the stem has at one of its ends, the one which projects from the main body, means of attachment of the corresponding intermediate end of the control cable sheath; a main spring fitted coaxially with respect to the stem and working permanently under compression with one of its ends resting against the main body and the other end against the stem; a switch made up of two fixed contacts included in the main body and a movable contact coupled to the stem, in which the fixed contacts, which are the same as each other, each have two arms, exterior and interior respectively, the exterior arms being set in a receptor cavity of said electrical connector; leaktightness means which prevent the entry of dust and liquids inside the main body.

The over-acceleration detector device of the invention is characterized in that the main body comprises in its interior a generally cylindrical front portion and a generally cylindrical rear portion, the rear portion being less in diameter than the front portion so as to form a stepped section, which front portion is situated near the closure cover and accomodates the switch, allowing it to move relative to the main body, and stress-increase means which act independently of the switch, while the rear portion contains the main spring; while at the open end of the main body the closure cover includes means for guidance which allow the exterior portion of the stem to slide with a snug sliding fit; and the rear portion of the main body has guidance means which allow the interior portion of the stem to slide with a snug sliding fit, the closed end of the main body is prolonged in an axial extension provided with means for attachment of the main body to a fixed point of the vehicle structure and means for attachment of the corresponding intermediate end of the control cable sheath, the axial extension having an orifice through which the steel cable of the control cable can slide.

Another characteristic of the over-acceleration detector device of the invention consists in the movable contact of the switch having an annular body set coaxially with respect to the interior portion of the stem upon which it can slide in both directions, with the annular body being situated between the stress-increase means and a stop fixed to the interior portion of the stem, the annular body being subjected permanently to the action of a positioning spring which works under compression with one of its ends resting against the stress-increase means and its other end against the annular body, in such a way that the annular body tends to occupy a position adjacent to the stop.

Another characteristic of the over-acceleration detector device of the invention consists in the interior arms of the fixed contacts of the switch being mounted in the front portion of the main body, with their respective free ends facing in coplanar fashion the annular body forming the movable contact.

Another characteristic of the over-acceleration detector device of the invention consists in the stress-increase means including, on the front portion of the main body, a running surface made up of two cylindrical portions of different diameter, front and rear respectively, in which the front portion is of larger diameter and is arranged facing the closure cover, while both portions are linked longitudinally to form an intermediate stepped section which forms a certain angle oriented towards the rear portion of the main body, and means of tightening on the stem.

Another characteristic of the over-acceleration detector device of the invention consists in the running surface of the stress-increase means being made up of a tubular adaptor superimposed on the interior surface of the front portion of the main body.

Another characteristic of the over-acceleration detector device of the invention consists in the tubular adaptor being attached to the front portion of the main body by means of an annular projection provided on the closure cover, in such a way that the tubular adaptor lies between the annular projection and the front portion of the main body.

Another characteristic of the over-acceleration detector device of the invention consists in the tightening means including, at least, one hollow radial extension open at its free end and containing a tightening spring which works permanently under compression with one of its ends against the bottom of the extension and its other end against a ball partially housed in the free end of the extension and able to slide in both directions, in such a way that the ball rests permanently on the running surface and can slide over said surface during the travelling movements of the stem in both directions.

Another characteristic of the over-acceleration detector device of the invention consists in the tightening means including two diametrally positioned radial extensions each housing a respective ball and tightening spring.

Another characteristic of the over-acceleration detector device of the invention consists in the means of guidance of the rear portion of the main body including a plurality of radial ribs, preferably four of same, regularly distributed and forming a passage which permits the interior portion of the stem to slide with a snug fit through them.

Another characteristic of the over-acceleration detector device of the invention consists in one of the ends of the main spring resting against the guidance means of the rear portion of the main body, while its other end rests against the stop of the switch.

Another characteristic of the over-acceleration detector device of the invention consists in the guidance means of the closure cover including, to the exterior and the interior, a respective axial extension provided with a centred orifice through which the exterior portion of the stem can slide with a snug fit.

Another characteristic of the over-acceleration detector device of the invention consists in the leaktightness means including, on the closure cover and in the centred orifice of the interior axial extension, a coaxial groove in which is fitted a seal.

### Brief description of the drawings

The drawings sheets of the present specification show the over-acceleration detector device of the invention. In the drawings:
Figure 1 is a schematic representation of the mounting of the over-acceleration detector device of the invention on an automobile vehicle.
Figure 2 is a longitudinal section view of the over-acceleration detector device of the invention with its switch open.
Figure 3 is a longitudinal section view of the over-acceleration detector device of the invention with its switch closed.
Figure 4 is a longitudinal section view of the over-acceleration detector device of the invention with its switch closed and with the stem occupying a position more advanced than that shown in Figure 3.
Figure 5 is a graph showing the movement of the stem of the device of the invention depending on the force applied on it.

### Detailed description of the example of embodiment

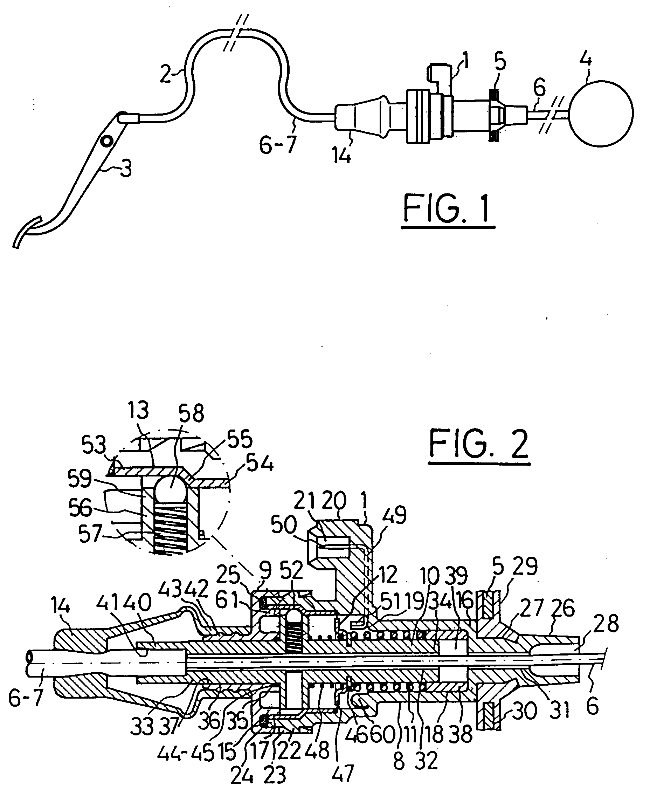

The schematic representation of Figure 1 shows how the over-acceleration detector device 1 of the invention is fitted at an intermediate point of the run of the control cable 2 which links the accelerator pedal 3 with the carburettor 4 of the vehicle engine. The detector device 1 is connected electrically to a mechanism, not shown, which acts on the automatic transmission gearbox of the vehicle in the way described above, and is attached to a fixed point 5 of the vehicle structure.

Figures 2, 3 and 4 show how the control cable 2 includes a steel cable 6 and a covering or sheath 7. The steel cable 6 traverses the detector device 1 and, without interruption, links the accelerator pedal 3 with the carburettor 4. Figure 1 shows how two portions of the control cable 2 can be distinguished, a first portion of sheathed steel cable 6, 7 which links the accelerator pedal 3 with the detector device 1, and a second portion of steel cable 6 which links the detector device 1 with the carburettor 4. In this example of application of the detector device 1, said second portion of control cable 2 has no sheath 7. It can be understood that such an arrangement arises in this case from the position of the detector device 1 with respect to the carburettor 4. Another different position of the detector device 1 with respect to the carburettor 4 may call for said second portion of control cable 2 to be provided with a sheath 7, without this under any circumstances affecting the operation of the detector device 1 or the essential nature of the invention.

In the following description of the detector device 1 of the invention, reference is made to Figures 2 to 4 of the drawings sheets.

The detector device 1 includes a main body 8, a closure cover, a stem 10, partially housed in the main body 8 and which can slide through it in both directions, a main spring 11, a switch 12, stress-increase means 13, which are shown in detail in said Figures 2 to 4, and a protective enclosure 14 coupled to the closure cover 9 and designed to prevent the entry of dust and liquid into the main body 8, which entry could affect the operation of the detector device 1. The main body 8, the closure cover 9 and the stem 10 are preferably made from plastics of suitable mechanical strength.

The main body 8 is hollow and has one of its ends open, the one marked with reference 15, to which is coupled the closure cover 9, while its other end 16 is closed. To the interior, there can be distinguished in the main body 8 a front portion 17 and a rear portion 18, laid out lengthwise and linked by means of an intermediate stepped section 19. In the front portion 17 are fitted the switch 12 and the stress-increase means 13, while the rear portion 18, which is of smaller diameter, contains the main spring 11. In its middle zone the main body 8 has an elbowed radial extension 20 whose free end has a cavity 21, designed to receive an electrical connector which is not shown.

The main body 8 has at its open end 15 a plurality of perimetrally distributed projections 22 for coupling of the closure cover 9. The projections 22 are designed to be housed in respective through-openings 23 made in a perimetral extension 24 of the closure cover 9. Once the closure cover 9 is coupled on the main body 8, which is carried out by double elastic deformation of said perimetral extension 24, leaktightness of the coupling is achieved by means of a seal 25 which is subjected to pressure between the closure cover 9 and the main body 8.

At its closed end 16, the main body 8 has an axial extension 26 provided to the exterior with a coaxial groove 27 and to the interior at its free end with a centred cavity 28. The groove 27 is designed to house with a snug fit an annular seal 29 of elastic material provided with a perimetral groove 30 in which is housed the fixed point 5 of the vehicle structure. The centred cavity 28 is designed to receive the corresponding intermediate end of the sheath 7 of control cable 2 in those cases in which, as stated above, the position of the detector device 1 with respect to the carburettor 4 calls for the portion of the control cable 2 lying between the detector device 1 and the carburettor 4 to be formed of sheathed steel cable 6, 7. The cavity 28 is linked with the rear portion 18 of the main body 8 by means of the axial orifice 31, so dimensioned that the steel cable 6 of the control cable 2 can slide through it with free play as it moves in either direction driven by the accelerator pedal 3.

The stem 10 is of elongated cylindrical general shape and, as stated above, is partially housed in the main body 8 and can be moved in both directions. The stem 10 is traversed longitudinally by an orifice 32 through which the steel cable 6 of the control cable 2 can slide freely. Longitudinally, there can be distinguished in the stem 10 an exterior portion 33, which projects from the main body 8 and traverses the closure cover 9, and an interior portion 34. For guiding of the exterior portion 33, the closure cover 9 is provided with an interior axial extension 35 and an exterior axial extension 36 traversed by a centred orifice 37 through which said exterior portion 33 can slide with a snug fit. For guiding the interior portion 34, the rear portion 18 of the main body 8 is provided with a plurality of radial ribs 38, preferably four in number, regularly distributed and forming a passage 39 through which the interior portion 34 of the stem 10 can slide with a snug fit.

The exterior portion 33 of the stem 10 has at its free end 40 a centred cavity 41 designed to receive with a snug fit and retain the corresponding intermediate end of the sheath 7 of the sheathed cable portion 6, 7 of the control cable 2 which links the detector device 1 with the accelerator pedal 3.

On the exterior axial extension 36 of the closure cover 9 are provided a plurality of perimetral projections 42 which, once the protection covering 14 is coupled, are clamped by a tubular extension 43 provided for the purpose on said covering 14. Furthermore, in order to achieve leaktightness of the passage of the exterior portion 33 of the stem 10 through the closure cover 9, the interior axial extension 35 of said cover 9 is provided with a groove 44 in which is housed a seal 45.

The main spring 11 is arranged coaxially with respect to the interior portion 34 of the stem 10 and works permanently under compression, with one of its ends resting against the main body 8 by radial ribs 38, and the other end against the stem 10 by a stop 46 which is attached to the stem 10.

The switch 12 of the detector device 1 includes an annular body 47, forming a movable contact, and fitted coaxially with respect to the interior portion 34 of the stem 10 on which it can slide in both directions for the distance lying between the stress-increase means 13 and the stop 46. Coaxially fitted with respect to the interior portion 34 of the stem 10, and between the annular body 47 and the stress-increase means 13, is a positioning spring 48 which works permanently under compression with one of its ends resting against the annular body 47 and its other end against the stress-increase means 13, in such a way that it tends permanently to situate the annular body 47 adjacent to the stop 46. The switch 12 further includes two similar fixed contacts 49 of a general "U" shape, included in the main body 1, on which their respective exterior arms 50 are set in the cavity 21 of the radial extension 20, while its respective interior arms 51 are mounted in the front portion 17 with their free ends facing the annular body 47 in coplanar fashion.

The stress-increase means 13 include a tubular adaptor 52 superimposed upon the interior surface of the front portion 17 of the main body 1, whose position is fixed by the perimetral projection 61 on the closure cover 9. The tubular adaptor 52 makes up two portions of different diameter and linked longitudinally, one front portion 53, which is the one of larger diameter and is fitted facing the closure cover 9, and a rear portion 54. Both front 53 and rear 54 portions are linked by a stepped section 55 which forms a certain angle oriented towards the rear portion 18 of the main body 8. In this example of embodiment of the detector device 1, on the interior portion 34 of the stem 10 the stress-increase means 13 further include two radial extensions 56 of generally hollow cylindrical form, in one of which there is a tightening spring 57 which works permanently under compression, with one of its ends resting against the bottom of said extension 56 and its other end against a ball 58 housed in the free end 59 of said extension 56, in such a way that the ball 58 presses on the tubular adaptor 52 and is designed to slide in either direction on it as the stem 10 moves. It can be understood that the other radial extension 56 can in its turn incorporate another tightening spring 57 and another ball 58, this depending on the needs arising in each specific case of application, and specifically in relation to the needs of increased force to be applied on the accelerator pedal 3 during driving of the vehicle, since under equal conditions the presence in the detector device 1 of said second tightening spring 57 and ball 58 increases in corresponding measure the action of resistance to the advance of the stem 10 offered by the stress-increase means 12.

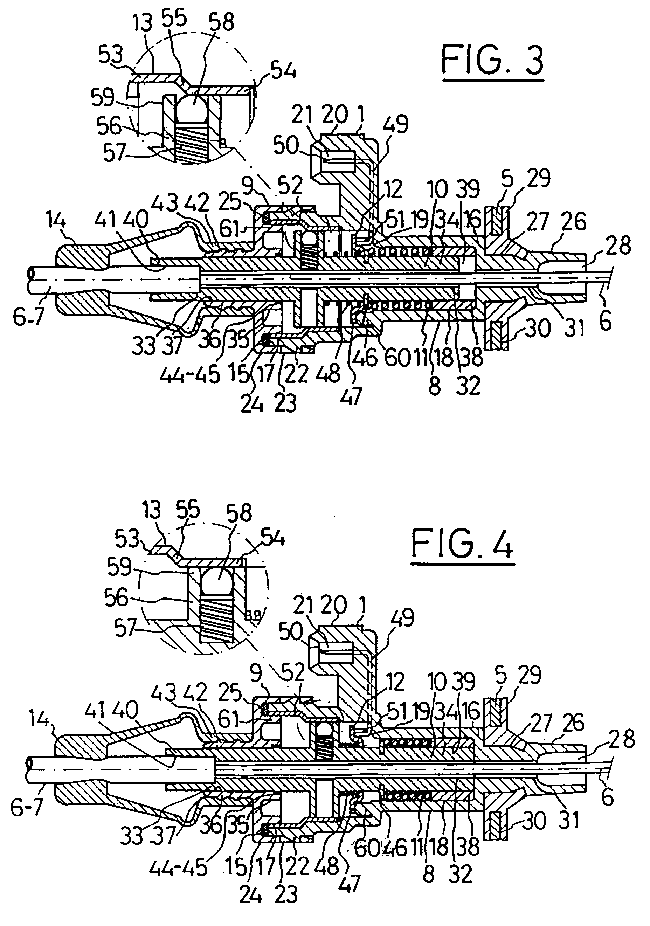

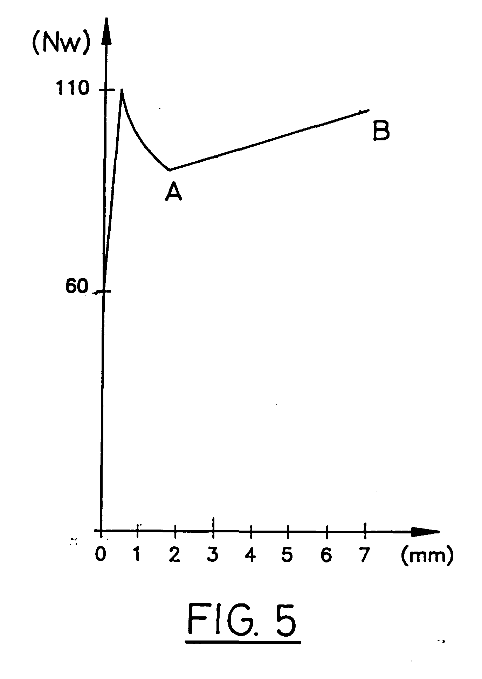

Once the detector device 1 has been coupled to the control cable 2 which links the accelerator pedal 3 with the carburettor 4 of the vehicle, and with the detector device 1 anchored to a fixed point 5 of the vehicle structure, as shown in Figure 1, the functioning of this example of embodiment of the detector device 1 of the invention, once the length of the sheathed portion 6, 7 of the control cable 2 has been adjusted, is as detailed below:
- with the accelerator pedal 3 at rest, that is, without it being pressed by the driver of the vehicle, the detector device 1 is in the initial position shown in Figure 2, in which the switch 12 is open due to separation of its fixed 49 and annular 47 contacts, while the ball 58 of the stress-increase means 13 rests on the front portion 53 of the tubular adaptor 52;
- the graph of Figure 5 shows how, principally, the force resulting from the elastic reactions of the main spring 11 and the tightening spring 57 of the stress-increase means 13, set a force of 60 Nw as the minimum value for the pressure exercised by the driver on the pedal 3 to be sufficient for the stem 10, driven by the sheath 7 of the control cable 2, to start its movement towards the interior of the main body 8;
- under normal conditions of acceleration, that is, in all those manoeuvres in which the driver does not press the accelerator pedal 3 fully down, the action of said main spring 11 and the tightening spring 57 is shown in said Figure 5, that is, under said normal conditions of acceleration the force which has to be applied to the stem 10 in its movements towards the interior of the main body 8 lies between said minimum value of 60 Nw and a maximum of 110 Nw;
- when the driver of the vehicle, in acting upon the accelerator pedal 3, exceeds said maximum value of 110 Nw, which corresponds to over-acceleration detection, the force resulting from the elastic reactions of the main spring 11 and the tightening spring 57 falls off very markedly as shown in Figure 5, due mainly to the fact that the ball 58 of the stress-increase means 13 rests on the rear portion 54 of the tubular adaptor 52 once is has slid on the stepped section 55, said reduction of the resulting force being clearly perceived by the driver of the vehicle;
- under the foregoing conditions, Figure 3 shows how the switch 12 of the detector device 1 is closed, that is, the annular body 47 makes contact with the interior arms 51 of the fixed contacts 49, said closure of the switch 12 leading, as outlined earlier, to the corresponding action on the vehicle gearbox;
- if the driver of the vehicle continues pressing on the accelerator pedal 3, the force resulting from the elastic reactions of the main spring 11 and the tightening spring 57 is shown in Figure 5 by the straight line A-B, the resulting force being that corresponding to travel of the stem 10 towards the interior of the main body 8 as shown in Figure 4;
- under the foregoing conditions, the switch 12 of the detector device remains closed, keeping the annular body 47 in contact with the interior arms 51 of the fixed contacts 49 by the action of the positioning spring 48, while the annular body 47 maintains an orthogonal position with respect to the stem 10 by resting on the projection 60 provided for the purpose on the intermediate stepped section 19 of the main body 8;
- when the driver of the vehicle ceases the action of pressing the accelerator pedal 3 fully down, the elastic reaction of the main spring 11 situates the stem 10 in the initial position shown in Figure 2, in which the switch 12 is open, leaving the detector device 1 in the initial service positions described above.

## Claims

1. An over-acceleration detector device, for engines of automobile vehicles, which includes:
- a hollow main body (8) of generally elongated cylindrical shape, one of the ends (15) of which is open and has a closure cover (9) coupled to it, while its other end (16) is closed, this main body (8) having in its middle zone a radial extension (20) whose free end is designed to receive an electrical connector;
- a stem (10) of generally cylindrical shape arranged coaxially with respect to the main body (8), in which it is partially housed, the stem (10) having a centred orifice (32) running through its entire length, through which orifice there can slide with free play the steel cable (6) of the control cable (2), while the stem (10) has at one of its ends, the one which projects from the main body (8), means of attachment of the corresponding intermediate end sheath (7) of the control cable (2);
- a main spring (11) fitted coaxially with respect to the stem (10) and working permanently under compression with one of its ends resting against the main body (8) and the other end against the stem (10);
- a switch (12) made up of two fixed contacts (49) included in the main body (8) and a movable contact (47) coupled to the stem (10), in which the fixed contacts (49), which are the same as each other, each have two arms, exterior (50) and interior (51) respectively, the exterior arms (50) being set in a receptor cavity (21) of said electrical connector;
- leaktightness means (14, 25, 45) which prevent the entry of dust and liquids inside the main body (8), and
which is characterized in that
the main body (8) comprises in its interior a generally cylindrical front portion (17) and a generally cylindrical rear portion (18), the rear portion (18) being less in diameter than the front portion (17) so as to form a stepped section (19), which front portion (17) is situated near the closure cover (9) and accomodates the switch (12), allowing it to move relative to the main body (8), and stress-increase means (13) which act independently of the switch (12), while the rear portion (18) contains the main spring (11), while at the open end (15) of the main body (8) the closure cover (9) includes means for guidance which allow the exterior portion (33) of the stem (10) to slide with a snug sliding fit, and the rear portion (18) of the main body (8) has guidance means which allow the interior portion (34) of the stem (10) to slide with a snug sliding fit, the closed end (16) of the main body (8) being prolonged in an axial extension (26) provided with means for attachment of the main body (8) to a fixed point (5) of the vehicle structure and means for attachment of the corresponding intermediate end of the control cable (2) sheath, the axial extension (26) having an orifice (31) through which the steel cable (6) of the control cable (2) can slide.

2. A detector device, as claimed in claim 1, characterized in that the movable contact of the switch (12) has an annular body (47) set coaxially with respect to interior portion (34) of the stem (10) upon which it can slide in both directions, with the annular body (47) being situated between the stress-increase means (13) and a stop (46) fixed to the interior portion (34) of the stem (10), the annular body (47) being subjected permanently to the action of a positioning spring (48) which works under compression with one of its ends resting against the stress-increase means (13) and its other end against the annular body (47), in such a way that the annular body (47) tends to occupy a position adjacent to the stop (46).

3. A detector device, as claimed in any of claims 1 and 2, characterized in that the interior arms (51) of the fixed contacts (49) of the switch (12) are mounted in the front portion (17) of the main body (8), with their respective free ends facing in coplanar fashion the annular body (47) forming the movable contact.

4. A detector device, as claimed in any of claims 1 to 3, characterized in that the stress-increase means (13) include, on the front portion (17) of the main body (8), a running surface made up of two cylindrical portions of different diameter, front (53) and rear (54) respectively, in which the front portion (53) is of larger diameter and is arranged facing the closure cover (9), while both portions (53, 54) are linked longitudinally to form an intermediate stepped section (55) which forms a certain angle oriented towards the rear portion (18) of the main body (8), and means of tightening on the stem (10).

5. A detector device, as claimed in claim 4, characterized in that the running surface of the stress-increase means (13) is made up of a tubular adaptor (52) superimposed on the interior surface of the front portion (17) of the main body (8).

6. A detector device, as claimed in claim 5, characterized in that the tubular adaptor (52) is attached to the front portion (17) of the main body (8) by means of an annular projection (61) provided on the closure cover (9), in such a way that the tubular adaptor (52) lies between the annular projection (61) and the front portion (17).

7. A detector device, as claimed in any of claims 1 to 4, characterized in that the tightening means include, at least, one hollow radial extension (56) open at its free end and containing a tightening spring (57) which works permanently under compression with one of its ends against the bottom of the extension (56) and its other end against a ball (58) partially housed in the free end of the extension (56) and able to slide in both directions, in such a way that the ball (58) rests permanently on the running surface and can slide over said surface during the travelling movements of the stem (10) in both directions.

8. A detector device, as claimed in claim 7, characterized in that the tightening means include two diametrally positioned radial extensions (56) each housing a respective ball (58) and tightening spring (57).

9. A detector device, as claimed in claim 1, characterized in that the means of guidance of the rear portion (18) of the main body (8) include a plurality of radial ribs (38), preferably four in number, regularly distributed and forming a passage (39) which permits the interior portion (34) of the stem (10) to slide with a snug fit through them.

10. A detector device, as claimed in any of claims 1 and 2, characterized in that one of the ends of the main spring (11) rests against the guidance means of the rear portion (18) of the main body, while its other end rests against the stop (46) of the switch (12).

11. A detector device, as claimed in claim 1, characterized in that the guidance means of the closure cover (9) include, to the exterior and the interior, a respective axial extension (35, 36) provided with a centred orifice (37) through which the exterior portion (33) of the stem (10) can slide with a snug fit.

12. A detector device, as claimed in claim 1, characterized in that the leaktightness means include, on the closure cover (9) and in the centred orifice (37) of the interior radial extension (35), a coaxial groove (44) in which is fitted a seal (45).

## Patentansprüche

1. Vorrichtung zum Erkennen der Überbeschleunigung für Motoren von Kraftfahrzeugen, welche umfaßt:
- einen hohlen Hauptkörper (8) von insgesamt länglicher zylindrischer Form, dessen eines Ende (15) offen ist und eine mit diesem verbundene Verschlußabdeckung (9) aufweist, während sein anderes Ende (16) geschlossen ist, wobei dieser Hauptkörper (8) in seinem mittleren Bereich einen radialen Fortsatz (20) aufweist, dessen freies Ende ausgelegt ist, um einen elektrischen Verbinder aufzunehmen;
- einen Schaft (10) von insgesamt zylindrischer Form, der in Bezug zum Hauptkörper (8) koaxial angeordnet ist, in welchem dieser teilweise untergebracht ist, wobei der Schaft (10) eine zentrische Öffnung (32) aufweist, die durch dessen gesamte Länge verläuft, durch weiche Öffnung das Stahlseil (6) des Steuerzugs (2) mit freiem Spiel gleiten kann, während der Schaft (10) an einem seiner Enden, nämlich demjenigen, das von dem Hauptkörper (8) vorsteht, Mittel zum Befestigen des entsprechenden Zwischenendes des Mantels (7) des Steuerzugs (2) aufweist;
- eine Hauptfeder (11), die in Bezug zum Schaft (10) koaxial aufgesetzt ist und permanent unter Kompression arbeitet, wobei eines ihrer Enden am Hauptkörper (8) anliegt und das andere Ende am Schaft (10);
- einen Schalter (12), der aus zwei im Hauptkörper (8) enthaltenen festen Kontakten (49) und einem beweglichen Kontakt (47), der mit dem Schaft (10) verbunden ist, besteht, in welchem die festen Kontakte (49), die jeweils einander gleich sind, jeweils zwei Arme, äußere (50) bzw. innere (51), aufweisen, wobei die äußeren Arme (50) in eine Aufnähmeaushöhlung (21) des elektrischen Verbinders eingesetzt sind;
- ein Leckabdichtungsmittel (14, 25, 45), das den Eintritt von Staub und Flüssigkeiten in den Innenraum des Hauptkörpers (8) verhindert, und welche Vorrichtung dadurch **gekennzeichnet** ist, daß
der Hauptkörper (8) in seinem Inneren einen insgesamt zylindrischen vorderen Abschnitt (17) und einen insgesamt zylindrischen hinteren Abschnitt (18) umfaßt, wobei der hintere Abschnitt (18) im Durchmesser kleiner ist als der vordere Abschnitt (17), um so einen gestuften Abschnitt (19) auszubilden, welcher vordere Abschnitt (17) in der Nähe der Verschlußabdeckung (9) angeordnet ist und den Schalter (12) aufnimmt, um diesem zu ermöglichen, sich relativ zum Hauptkörper (8) zu bewegen, sowie Spannungsvergrößerungsmittel (13), die unabhängig von dem Schalter (12) agieren, während der hintere Abschnitt (18) die Hauptfeder (11) enthält, während die Verschlußabdeckung (9) am offenen Ende (15) des Hauptkörpers (8) Mittel zum Führen umfaßt, die es dem äußeren Abschnitt (33) des Schafts (10) erlauben, unter Gleitpassung zu gleiten, und der hintere Abschnitt (18) des Hauptkörpers (8) Führungsmittel aufweist, die es dem inneren Abschnitt (34) des Schafts (10) erlauben, unter einer Gleitpassung zu gleiten, wobei das geschlossene Ende (16) des Hauptkörpers (8) sich in einen Axialfortsatz (26) ausdehnt, der mit Mitteln zum Befestigen des Hauptkörpers (8) an einem festen Punkt (5) des Fahrzeugaufbaus und mit Mitteln zum Befestigen des entsprechenden Zwischenendes des Mantels des Steuerzugs (2) versehen ist, wobei der Axialfortsatz (26) eine Öffnung (31) aufweist, durch die das Stahlseil (6) des Steuerzugs (2) gleiten kann.

2. Detektorvorrichtung nach Anspruch 1, dadurch **gekennzeichnet**, daß der bewegliche Kontakt des Schalters (12) einen ringförmigen Körper (47) aufweist, der in Bezug zum inheren Abschnitt (34) des Schafts (10) koaxial eingesetzt ist, auf welchem dieser in beide Richtungen gleiten kann, wobei der ringförmige Körper (47) zwischen den Spannungsvergrößerungsmitteln (13) und einem am inneren Abschnitt (34) des Schalts (10) befestigten Anschlag (46) angeordnet ist, wobei der ringförmige Körper (47) permanent dem Druck einer Positionierfeder (48) ausgesetzt ist, die unter Druck arbeitet, wobei eines ihrer Enden an den Spannungsvergrößerungsmitteln (13) anliegt und ihr anderes Ende am ringförmigen Körper (47), und zwar in einer solchen Art und Weise, daß der ringförmige Körper (47) dazu neigt, eine zum Anschlag (46) benachbarte Position einzunehmen.

3. Detektorvorrichtung nach einem der Ansprüche 1 und 2, dadurch **gekennzeichnet**, daß die inneren Arme (51) der festen Kontakte (49) des Schalters (12) in dem vorderen Abschnitt (17) des Hauptkörpers (8) montiert sind, wobei deren jeweilige freie Enden dem ringförmigen Körper in koplanarer Weise gegenüberliegen, welcher den beweglichen Kontakt ausbildet.

4. Detektorvorrichtung nach einem der Ansprüche 1 bis 3, dadurch **gekennzeichnet**, daß die Spannungsvergrößerungsmittel (13) auf dem vorderen Abschnitt (17) des Hauptkörpers (8) eine Lauffläche umfassen, die aus zwei zylindrischen Abschnitten, einem vorderen (53) bzw. hinteren (54), mit verschiedenen Durchmessern ausgebildet ist, wobei der vordere Abschnitt (53) einen größeren Durchmesser aufweist und der Verschlußabdeckung (9) gegenüberliegend angeordnet ist, während beide Abschnitte (53, 54) in Längsrichtung verbunden sind, um einen gestuften Zwischenabschnitt (55) auszubilden, welcher einen gewissen Winkel ausbildet, der zum hinteren Abschnitt (18) des Hauptkörpers (8) hin orientiert ist, sowie ein Mittel auf dem Schaft (10) zum Abdichten.

5. Detektorvorrichtung nach Anspruch 4, dadurch **gekennzeichnet**, daß die auf fläche der Spannungsvergrößerungsmittel (13) aus einem rohrartigen Adapter (52) ausgebildet ist, der der inneren Oberfläche des vorderen Abschnitts (17) des Hauptkörpers (8) überlagert ist.

6. Detektorvorrichtung nach Anspruch 5, dadurch **gekennzeichnet**, daß der rohrartige Adapter (52) mit Hilfe eines ringförmigen Vorsprungs (61), der auf der Verschlußabdeckung (9) vorgesehen ist, am vorderen Abschnitt (17) des Hauptkörpers (8) angebracht ist, und zwar in einer solchen Art und Weise, daß der rohrartige Adapter (52) zwischen dem ringförmigen Vorsprung (61) und dem vorderen Abschnitt (17) liegt.

7. Detektorvorrichtung nach einem der Ansprüche 1 bis 4, dadurch **gekennzeichnet**, daß die Abdichtungsmittel zumindest einen hohlen radialen Fortsatz (56) umfassen, der an seinem freien Ende offen ist und eine Dichtungsfeder (57) enthält, die permanent unter Druck arbeitet, wobei eines ihrer Enden am Boden des Fortsatzes (56) anliegt und ihr anderes Ende an einer Kugel (58), die teilweise in dem freien Ende des Fortsatzes (56) untergebracht ist und in der Lage ist, in beide Richtungen zu gleiten, und zwar in einer solchen Art und Weise, daß die Kugel (58) permanent auf der Lauffläche ruht und während den Verschiebungsbewegungen des Schaftes (10) in beide Richtungen über diese Fläche gleiten kann.

8. Detektorvorrichtung nach Anspruch 7, dadurch **gekennzeichnet**, daß die Abdichtungmittel zwei diametral angeordnete radiale Fortsätze (56) umfassen, die jeweils eine jeweilige Kugel (58) sowie eine Dichtungsfeder (57) aufnehmen.

9. Detektorvorrichtung nach Anspruch 1, dadurch **gekennzeichnet**, daß die Führungsmittel des hinteren Abschnitts (18) des Hauptkörpers (8) eine Anzahl von radialen Rippen (38), vorzugsweise vier an der Zahl, umfassen und einen Durchgang (39) ausbilden, der es dem inneren Abschnitt (34) des Schafts (10) ermöglicht, durch diesen unter enger Passung zu gleiten.

10. Detektorvorrichtung nach einem der Ansprüche 1 und 2, dadurch **gekennzeichnet**, daß eines der Enden der Hauptfeder (11) an den Führungsmitteln des hinteren Abschnitts (18) des Hauptkörpers anliegt, während ihr anderes Ende am Anschlag (46) des Schalters (12) anliegt.

11. Detektorvorrichtung nach Anspruch 1, dadurch **gekennzeichnet**, daß die Führungsmittel der Verschlußabdeckung (9) von außen nach innen einen jeweiligen axialen Fortsatz (35, 36) umfassen, der mit einer zentrischen Öffnung (37) versehen ist, durch die der äußere Abschnitt (33) des Schafts (10) unter enger Passung gleiten kann.

12. Detektorvorrichtung nach Anspruch 1, dadurch **gekennzeichnet**, daß die Leckabdichtungsmittel auf der Verschlußabdeckung (9) und in der zentrischen Öffnung (37) des inneren radialen Fortsatzes (35) eine koaxiale Nut (44) umfassen, in die eine Dichtung (45) eingepaßt ist.

## Revendications

1. Dispositif détecteur de sur-accélération, pour moteurs de véhicules automobiles, comprenant:
- un corps principal (8) creux de forme généralement allongée cylindrique, dont une des extrémités (15) est ouverte et présente un couvercle de fermeture (9) qui lui est couplé, tandis que son autre extrémité (16) est fermée, ce corps principal (8) ayant dans sa zone médiane une extension radiale (20) dont l'extrémité libre est conçue pour recevoir un connecteur électrique.
- une tige (10) de forme généralement cylindrique disposée de façon coaxiale par rapport au corps principal (8), dans laquelle elle est partiellement logée, la tige (10) ayant un orifice centré (32) traversant toute sa longueur, à travers lequel orifice le câble métallique (6) du câble de commande (2) peut glisser librement, tandis que la tige (10) a, à une de ses extrémités, celle qui dépasse du corps principal (8), des moyens de fixation de la gaine (7) d'extrémité intermédiaire correspondante du câble de commande (2);
- un ressort principal (11) monté de façon coaxiale par rapport à la tige (10) et travaillant en permanence en compression avec une de ses extrémités reposant contre le corps principal (8) et l'autre extrémité contre la tige (10);
- un interrupteur (12) constitué de deux contacts fixes (49) compris dans le corps principal (8) et d'un contact mobile (47) couplé à la tige (10), dans lequel les contacts fixes (49), qui sont identiques entre eux, ont chacun deux bras, extérieurs (50) et intérieurs (60) respectivement, les bras extérieurs (50) étant placés dans une cavité réceptrice (21) dudit connecteur électrique;
- des moyens d'étanchéité (14, 25, 45) qui empêchent l'intrusion de poussières et de liquides à l'intérieur du corps principal (8), et qui est caractérisé en ce que
le corps principal (8) comprend à l'intérieur une portion frontale (17) généralement cylindrique et une portion arrière (18) généralement cylindrique, la portion arrière (18) ayant un diamètre inférieur à celui de la portion frontale (17) de façon à former une portion étagée (19), laquelle portion frontale (17) est située près du couvercle de fermeture (9) et loge l'interrupteur (12), lui permettant de se déplacer par rapport au corps principal (8), et des moyens augmentant la contrainte (13) qui agissent indépendamment de l'interrupteur (12), tandis que la portion arrière (18) contient le ressort principal (11), tandis qu'à l'extrémité ouverte (15) du corps principal (8) le couvercle de fermeture (9) comprend des moyens de guidage qui permettent à la portion extérieure (33) de la tige (10) de glisser avec un ajustage à frottement doux, et la portion arrière (18) du corps principal (8) a des moyens de guidage qui permettent à la portion intérieure (34) de la tige (10) de glisser avec un ajustage à frottement doux, l'extrémité fermée (16) du corps principal (8) étant prolongée dans une extension axiale (26) munie de moyens d'attachement du corps principal (8) à un point fixe (5) de la structure du véhicule et de moyens d'attachement de l'extrémité intermédiaire correspondante de la gaine du câble de commande (2), l'extension axiale (26) ayant un orifice (31) à travers lequel le câble métallique (6) du câble de commande (2) peut glisser.

2. Dispositif détecteur selon la revendication 1, caractérisé en ce que le contact mobile de l'interrupteur (12) a un corps annulaire (47) placé de façon coaxiale par rapport à la portion intérieure (34) de la tige (10) sur laquelle il peut glisser dans les deux directions, le corps annulaire(47) étant situé entre les moyens augmentant la contrainte (13) et une butée (46) fixée à la portion intérieure (34) de la tige (10), le corps annulaire(47) étant soumis en permanence à l'action d'un ressort de positionnement (48) qui travaille en compression avec une de ses extrémités reposant contre les moyens augmentant la contrainte (13) et son autre extrémité contre le corps annulaire(47) de telle façon que le corps annulaire(47) tend à occuper une position adjacente à la butée (46).

3. Dispositif détecteur selon l'une quelconque des revendications 1 et 2, caractérisé en ce que les bras intérieurs (51) des contacts fixes (49) de l'interrupteur (12) sont montés dans la portion frontale (17) du corps principal (8), avec leurs extrémités libres respectives faisant face de façon coplanaire au corps annulaire(47) formant le contact mobile.

4. Dispositif détecteur selon l'une quelconque des revendications 1 à 3, caractérisé en ce que les moyens augmentant la contrainte (13) comprennent, sur la portion frontale (17) du corps principal (8), une surface de roulement constituée de deux portions cylindriques de diamètre différent, les portions frontale (53) et arrière (54) respectivement, dans laquelle la portion frontale (53) a un diamètre plus grand et est disposée de façon à faire face au couvercle de fermeture (9), tandis que les deux portions (53, 54) sont reliées longitudinalement pour former une section étagée (55) intermédiaire qui forme un certain angle orienté vers la portion arrière (18) du corps principal (8), et des moyens de serrage sur la tige (10).

5. Dispositif détecteur selon la revendication 4, caractérisé en ce que la surface de roulement des moyens augmentant la contrainte (13) est constituée d'un adaptateur tubulaire (52) superposé sur la surface intérieure de la portion frontale (17) du corps principal (8).

6. Dispositif détecteur selon la revendication 5, caractérisé en ce que l'adaptateur tubulaire (52) est attaché à la portion frontale (17) du portion arrière (18) au moyen d'une saillie annulaire (61) prévue sur le couvercle de fermeture (9) de telle façon que l'adaptateur tubulaire (52) est situé entre la saillie annulaire (61) et la portion frontale (17).

7. Dispositif détecteur selon l'une quelconque des revendications 1 à 4, caractérisé en ce que les moyens de serrage comprennent au moins une extension radiale (56) creuse ouverte à son extrémité libre et contenant un ressort de serrage (57) qui travaille en permanence en compression avec une de ses extrémités contre le bas de l'extension (56) et son autre extrémité contre une bille (58) partiellement logée dans l'extrémité libre de l'extension (56) et capable de glisser dans les deux directions de sorte que la bille (58) repose en permanence sur la surface de roulement et peut glisser sur ladite surface pendant les mouvements de déplacement de la tige (10) dans les deux directions.

8. Dispositif détecteur selon la revendication 7, caractérisé en ce que les moyens d'étanchéité comprennent deux extensions radiales (56) diamétralement opposées logeant chacune une bille (58) et un ressort de serrage (57) respectifs.

9. Dispositif détecteur selon la revendication 1, caractérisé en ce que les moyens de guidage de la portion arrière (18) du corps principal (8) comprennent une pluralité de nervures radiales (38), de préférence au nombre de quatre, réparties régulièrement et formant un passage (39) qui permet à la portion intérieure (34) de la tige (10) de glisser à travers elles avec un ajustage à frottement doux.

10. Dispositif détecteur selon l'une quelconque des revendications 1 et 2, caractérisé en ce qu'une des extrémités du ressort principal (11) repose contre les moyens de guidage de la portion arrière (18) du corps principal tandis que son autre extrémité repose contre la butée (46) de l'interrupteur (12).

11. Dispositif détecteur selon la revendication 1, caractérisé en ce que les moyens de guidage du couvercle de fermeture (9) comprennent,..vers l'extérieur et vers l'intérieur, une extension axiale respective (35, 36) munie d'un orifice centré (37) à travers lequel la portion extérieure (33) de la tige (10) peut glisser avec un ajustage à frottement doux.

12. Dispositif détecteur selon la revendication 1, caractérisé en ce que les moyens d'étanchéité comprennent, sur le couvercle de fermeture (9) et dans l'orifice centré (37) de l'extension radiale intérieure (35), une gorge coaxiale (44) dans laquelle est monté un joint d'étanchéité (45).
